# FASCICULE DE BREVET EUROPEEN

(11) **EP 3 558 673 B1**
(45) Date de publication et mention de la délivrance du brevet: **23.08.2023**
(21) Numéro de dépôt: 17837972.3
(22) Date de dépôt: 20.12.2017
(51) Int. Cl.: B32B 25/10, A01K 1/00, A01K 1/015, B32B 25/14, B32B 25/16, B32B 27/12, B32B 27/30, B32B 1/08, B32B 3/02, B32B 3/04

(54) **DISPOSITIF TUBULAIRE SOUPLE COMPORTANT UNE PAROI TUBULAIRE À MATRICE ÉLASTOMÈRE, ENCEINTE D'ÉLEVAGE COMPORTANT UN TEL DISPOSITIF ET PROCÉDÉ DE FABRICATION DE CE DERNIER**
FLEXIBLE ROHRFÖRMIGE VORRICHTUNG MIT EINEM ROHRFÖRMIGEN WAND MIT EINER ELASTOMERMATRIX, AUFZUCHTGEHÄUSE MIT SOLCH EINER VORRICHTUNG UND VERFAHREN ZUR HERSTELLUNG DES LETZTEREN
FLEXIBLE TUBULAR DEVICE COMPRISING A TUBULAR WALL WITH AN ELASTOMER MATRIX, REARING ENCLOSURE COMPRISING SUCH A DEVICE AND METHOD FOR MANUFACTURING THE LATTER

(30) Priorité: 21.12.2016 FR 1663043
(43) Date de publication de la demande: 30.10.2019
(73) Titulaire: Bioret Agri-Logette Confort, 44390 Nort sur Erdre (FR)
(72) Inventeur: BIORET, Jean-Vincent, 44390 Petit Mars (FR)
(74) Mandataire: Jacobacci Coralis Harle
(86) Numéro de dépôt international: PCT/FR2017/053738
(87) Numéro de publication internationale: WO 2018/115745

(56) Documents cités:
- WO-A1-2011/162596
- FR-A1- 2 268 959
- GB-A- 2 538 353

## Description

### DOMAINE TECHNIQUE AUQUEL SE RAPPORTE L'INVENTION

La présente invention concerne, de manière générale, le domaine des dispositifs tubulaires souples comportant une paroi tubulaire à matrice élastomère qui délimite une chambre étanche destinée à être remplie avec un fluide.

Elle concerne encore une enceinte d'élevage comprenant au moins une logette équipée d'un tel dispositif tubulaire souple pour former un arrêtoir inférieur.

### ARRIERE-PLAN TECHNOLOGIQUE

Dans certains domaines techniques, il peut être intéressant de mettre en oeuvre des dispositifs tubulaires souples qui comprennent une pièce monobloc comportant une paroi tubulaire délimitant une chambre étanche destinée à être remplie avec un fluide.

Pour concilier résistance et souplesse, la paroi tubulaire comprend une matrice élastomère dans laquelle sont intégrés des plis de renfort.

Un tel dispositif tubulaire souple est par exemple décrit dans le document FR 2 268 959, dans le domaine des pompes volumétriques, les documents GB 2 538 353 A et WO 2011/162596 A1 étant des exemples de tuyaux flexibles pour la séparation de cases dans une étable.

Un tel dispositif tubulaire souple peut par exemple équiper une logette d'une enceinte d'élevage pour former un arrêtoir inférieur.

En effet, dans le domaine de l'élevage, avec le temps de présence des animaux en bâtiment qui augmente, le confort du couchage en logettes peut devenir critique.

Un arrêtoir inférieur et une barre de cou sont alors deux éléments qui permettent à la vache de bien se positionner dans sa logette.

L'arrêtoir inférieur ne doit pas comporter d'arêtes vives qui seraient susceptibles de provoquer des blessures aux genoux des animaux. Il doit en plus être suffisamment haut au-dessus du couchage.

Les systèmes conventionnels tels que les sangles offrent un écran dissuasif, mais des animaux habitués n'hésitent pas à les pousser et les détendre ; elles perdent donc leur efficacité et nécessitent d'être retendues régulièrement. Les arrêtoirs en bois (chevrons) sont curatifs et bloquent bien les animaux, mais nuisent à leur confort et peuvent provoquer quelques traumatismes lors des chocs.

Les arrêtoirs inférieurs sont ainsi avantageusement formés par des dispositifs tubulaires souples précités.

Ce dernier mode de réalisation présente différents avantages :
- pas de traumatisme lors du couchage,
- hauteur et dureté réglables (notamment suivant le type de vache, de génétique, de logette, de matelas),
- favorise une position allongée naturelle de la vache, souvent avec une patte allongée vers l'avant sur l'arrêtoir,
- absorption des chocs.

Mais, les dispositifs tubulaires souples actuels ne sont pas entièrement satisfaisants : la paroi tubulaire est sujette à des phénomènes de déchirures / ruptures, entraînant un écoulement du fluide hors de la chambre étanche.

Par exemple dans l'application « arrêtoir inférieur » précitée, la rupture est provoquée par les efforts répétés qui sont générés par les animaux.

Il existe par conséquent un besoin de dispositifs tubulaires souples qui comporteraient une résistance accrue à l'égard des phénomènes de déchirures / ruptures.

### OBJET DE L'INVENTION

Afin de remédier à l'inconvénient précité de l'état de la technique, la présente invention propose un nouveau dispositif tubulaire souple comportant un nouvel agencement dudit au moins un pli de renfort.

Il a en effet été constaté que les phénomènes de déchirures / ruptures provenaient d'un agencement inadapté dudit au moins un pli de renfort dans les dispositifs tubulaires souples actuels.

Plus particulièrement, on propose selon l'invention un dispositif tubulaire souple comprenant une pièce monobloc comportant une paroi tubulaire qui délimite une chambre étanche destinée à être remplie avec un fluide ; la paroi tubulaire comprend une matrice élastomère dans laquelle est intégré au moins un pli de renfort délimité par deux portions longitudinales.

Et selon l'invention, ledit au moins un pli de renfort a une forme générale d'un manchon qui s'étend au sein de ladite paroi tubulaire pour entourer ladite chambre étanche ; lesdites deux portions longitudinales dudit au moins un pli de renfort sont juxtaposées l'une par rapport à l'autre.

Dans la présente invention, ledit au moins un pli de renfort est continu (ou au moins quasiment continu) sur toute la circonférence de la paroi tubulaire.

Cet agencement confère une augmentation significative de la résistance du dispositif tubulaire souple, et ainsi une réduction sensible des phénomènes de déchirures / ruptures rencontrés avec les dispositifs tubulaires souples de l'art antérieur.

D'autres caractéristiques non limitatives et avantageuses du dispositif tubulaire souple conforme à l'invention, prises individuellement ou selon toutes les combinaisons techniquement possibles, sont les suivantes :
- la pièce monobloc comporte une lèvre longitudinale radiale, raccordée longitudinalement à ladite paroi tubulaire ; et les deux portions longitudinales dudit au moins un pli de renfort sont superposées au sein de ladite lèvre longitudinale radiale ; selon un mode de réalisation particulier, ladite paroi tubulaire comporte une couche élastomère intérieure et une couche élastomère extérieure, qui prennent en sandwich ledit au moins un pli de renfort ; et ladite lèvre longitudinale radiale comporte les deux portions longitudinales dudit au moins un pli de renfort qui, d'une part, prennent en sandwich une portion latérale de la couche élastomère intérieure et, d'autre part, sont pris en sandwich par deux portions latérale de la couche élastomère extérieure ;
- à vide, ledit dispositif tubulaire souple se présente sous la forme d'une bande parallélépipédique comportant deux parois parallélépipédiques superposées qui délimitent la chambre étanche et qui sont assemblées au niveau de deux portions latérales ; lequel au moins un pli de renfort comprend, d'une part, deux pans principaux s'étendant chacun sur la largeur de l'une des deux parois parallélépipédiques et, d'autre part, un pan de jonction s'étendant au sein d'une première desdites portions latérales ; lesquelles portions longitudinales dudit au moins un pli de renfort s'étendent au sein d'une seconde desdites portions latérales.

L'invention propose également une enceinte d'élevage comprenant au moins une logette délimitée par :
- deux séparations latérales, par exemple des structures tubulaires,
- un seuil arrière de logette, s'étendant le long d'un couloir d'accès,
- une limite avant, formant le fond de la logette,
   laquelle limite avant comporte un dispositif tubulaire souple selon l'invention pour former un arrêtoir inférieur.

De préférence, ledit seuil arrière est également équipé d'un dispositif tubulaire souple selon l'invention.

Encore de préférence, ladite enceinte d'élevage comprend des moyens pour remplir ledit au moins un dispositif tubulaire souple.

Toujours de préférence, ledit au moins un dispositif tubulaire souple est fixé par le biais de moyens de fixation rapportés au travers de sa lèvre longitudinale radiale.

L'invention concerne aussi un procédé pour la fabrication du dispositif tubulaire souple selon l'invention, comprenant :
(i) une étape de superposition d'au moins deux couches en matériau élastomère entre lesquelles est rapporté au moins un pli de renfort, pour former une bande intermédiaire,
(ii) une étape de dépose de moyens intercalaires sur une surface libre de ladite bande intermédiaire, aptes à empêcher localement une solidarisation de ladite surface libre pour former la chambre étanche,
(iii) une étape de repliement en deux de ladite bande intermédiaire, le long d'une ligne de pliage correspond à un axe longitudinal médian de ladite bande intermédiaire, de sorte à prendre en sandwich lesdits moyens intercalaires, et
(iv) une étape de solidarisation des surfaces en contact desdites couches superposées, pour former ledit dispositif tubulaire souple.

### DESCRIPTION DETAILLEE DE L'INVENTION

L'invention sera encore illustrée, sans être aucunement limitée, par la description suivante de modes de réalisation particuliers en relation avec les figures annexées dans lesquelles :
- la figure 1 est une vue schématique, représentée en perspective et avec un plan de coupe transversal, d'un dispositif tubulaire souple conforme à l'invention ;
- la figure 2 représente, de manière schématique, une vue en coupe transversale du dispositif tubulaire souple selon la figure 1, dont la chambre étanche est à vide ;
- la figure 3 est une vue schématique, et de côté, des principales étapes du procédé pour la fabrication du dispositif tubulaire souple selon les figures 1 et 2 ;
- la figure 4 est une vue schématique, et en perspective, d'une série de logettes qui est équipée de deux dispositifs tubulaires souples selon l'invention ;
- la figure 5 représente, vue de côté, la série de logettes selon la figure 4.

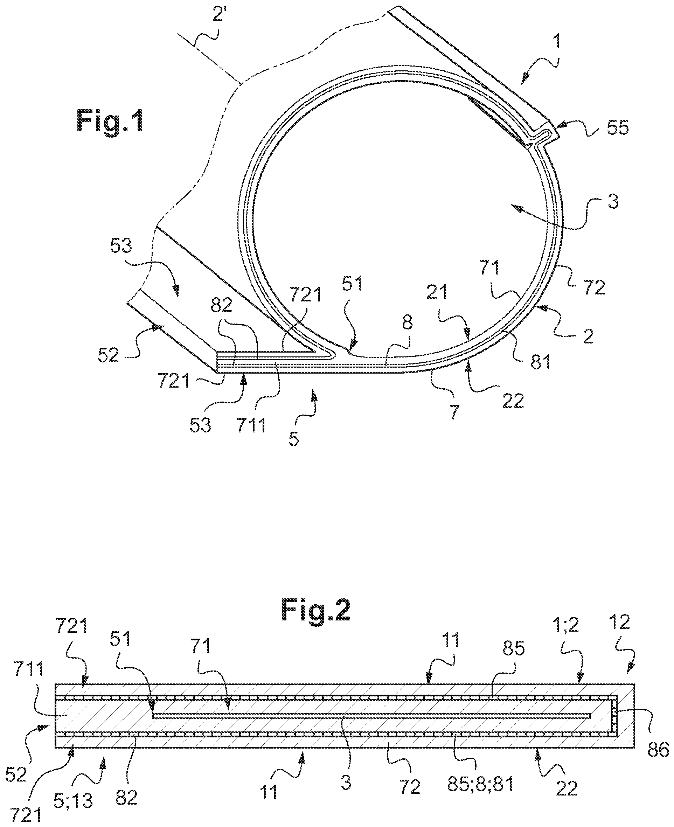

Le dispositif tubulaire souple 1 est représenté sur la figure 1, de manière schématique et isolée.

Ce dispositif tubulaire souple 1 consiste en une pièce monobloc, en forme générale de boudin ou de tube, qui comprend ici deux principales parties :
- une paroi tubulaire 2 qui délimite une chambre étanche 3 remplie avec un fluide, et
- une lèvre longitudinale radiale 5, raccordée longitudinalement à la paroi tubulaire 2 et s'étendant avantageusement sur toute la longueur de cette dernière.

La paroi tubulaire 2 est continue (ici dépourvue d'ouverture longitudinale) ; la lèvre longitudinale radiale 5 est réalisée monobloc avec ladite paroi tubulaire 2.

Lorsque la chambre étanche 3 est remplie, la paroi tubulaire 2 est de forme générale cylindrique et comporte un axe longitudinal 2'.

Cette paroi tubulaire 2 comporte deux surfaces cylindriques opposées :
- une surface intérieure 21, qui délimite la chambre étanche 3, et
- une surface extérieure 22.

La distance entre ces deux surfaces 21, 22 définit l'épaisseur de la paroi tubulaire 2.

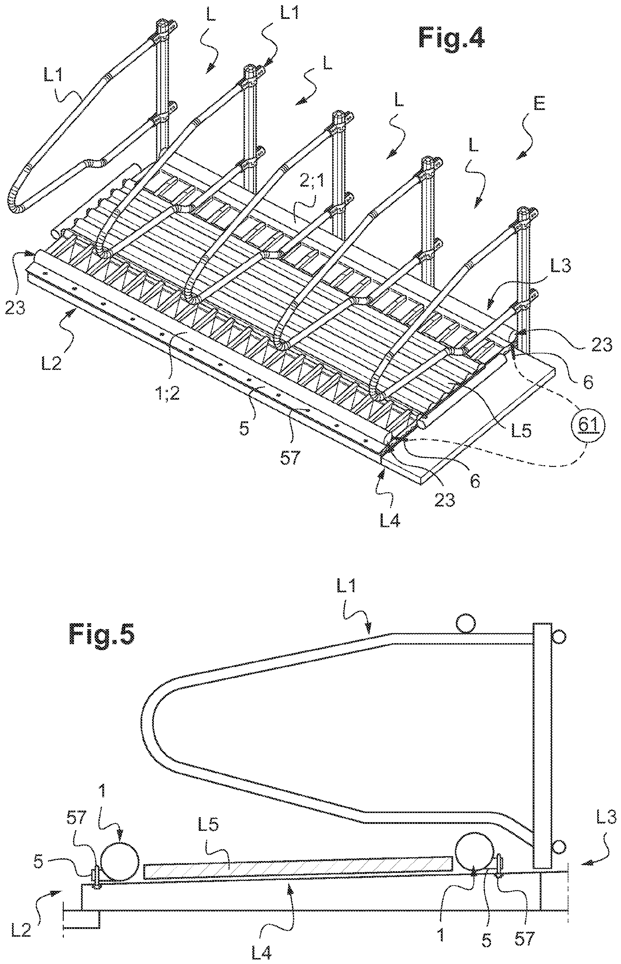

Cette paroi tubulaire 2 comporte encore deux extrémités 23 qui sont fermées de manière étanche (voir figure 4). La distance entre ces deux extrémités 23 définit la longueur de la paroi tubulaire 2.

Par exemple, la paroi tubulaire 2 comporte les caractéristiques dimensionnelles suivantes :
- une surface intérieure 21 dont le diamètre est compris entre 150 et 400 mm,
- une épaisseur comprise entre 1,5 et 6 mm,
- une longueur fonction de la limite transportable (poids, diamètre d'enroulement, etc.).

A titre indicatif, la chambre étanche 3 est destinée à être remplie avec un fluide, par exemple de l'eau, à une pression comprise entre 100 mbar et 2 bar.

La lèvre longitudinale radiale 5 a une forme générale d'une platine parallélépipédique, qui est délimitée latéralement par deux bordures longitudinales :
- une bordure intérieure 51, raccordée de manière monobloc à la paroi tubulaire 2, et
- une bordure extérieure 52, libre.

Ces deux bordures longitudinales 51, 52 de la lèvre longitudinale radiale 5 s'étendent parallèlement à l'axe longitudinal 2' de la paroi tubulaire 2.

Cette lèvre longitudinale radiale 5 comporte encore deux surfaces opposées 53, rectangulaires, qui viennent chacune dans le prolongement de la surface extérieure 22 de la paroi tubulaire 2.

La distance entre les deux bordures longitudinales 51, 52 définit la largeur de la lèvre longitudinale radiale 5. La distance entre les deux surfaces opposées 53 définit l'épaisseur de la lèvre longitudinale radiale 5.

Par exemple, la lèvre longitudinale radiale 5 comporte les caractéristiques dimensionnelles suivantes :
- une épaisseur comprise entre 3 mm et 12 mm, et
- une largeur comprise entre 50 mm et 100 mm.

De manière diamétralement opposée à la lèvre longitudinale radiale 5, la paroi tubulaire 2 comporte ici une nervure longitudinale radiale 55.

La nervure longitudinale radiale 55 s'étend avantageusement sur toute la longueur de la paroi tubulaire 2. Cette nervure longitudinale radiale 55 découle du procédé de fabrication décrit ci-après.

Le dispositif tubulaire souple 1 est réalisé dans une matrice élastomère 7 au sein de laquelle est intégré au moins un pli de renfort 8.

La matrice élastomère 7 comprend au moins un matériau apte à subir une déformation élastique, dit encore « matériau élastique », qui est par exemple choisi parmi :
- les matériaux élastomères, à savoir par exemple le caoutchouc naturel, le caoutchouc « naturel synthétique » (ou polyisoprène synthétique), le polybutadiène ou le styrène-butadiène, ou
- les matériaux plastiques ou élastomères thermoplastiques (TPE).

Ledit au moins un pli de renfort 8 est réalisé dans un matériau choisi par exemple parmi les fibres textiles, les fibres de métal ou tout autre produit apportant la stabilité ou la résistance à l'élongation.

Ledit au moins un pli de renfort 8 consiste par exemple en une armature textile servant de renfort, réalisée avantageusement en un matériau choisi parmi le nylon, le coton, le polyester, le polyamide ou tout autre textile de renfort.

De manière générale, ledit au moins un pli de renfort 8 est agencé pour conférer une résistance optimale au dispositif tubulaire souple 1. Il est en particulier conformé pour optimiser la résistance de la paroi tubulaire 2 lorsque sa chambre étanche 3 est remplie avec le fluide.

A cet effet, le dispositif tubulaire souple 1 comporte un pli de renfort 8 présentant ici deux parties :
- une partie principale 81, qui présente une forme générale de manchon et qui s'étend au sein de la paroi tubulaire 2, pour entourer la chambre étanche 3, et
- deux portions longitudinales 82, qui sont juxtaposées l'une par rapport à l'autre (ici au sein de la lèvre longitudinale radiale 5).

En d'autres termes, la partie principale 81 présente, vue en coupe, une forme générale d'une boucle, continue ou au moins quasiment continue, qui se referme sur elle-même.

La partie principale 81 confère ainsi sa forme et sa résistance à la chambre étanche 3.

Cette partie principale 81 s'étend ici de manière continue au sein de la nervure longitudinale radiale 55, sous la forme d'un décroché (par exemple en forme de U s'ouvrant vers la chambre étanche 3).

On notera que cette forme particulière de la partie principale 81, continue de part et d'autre de la lèvre longitudinale radiale 5, confère une résistance particulièrement intéressante à la chambre étanche 3.

Au niveau des extrémités 23 de la paroi tubulaire 2, le pli de renfort 8 se termine par un bord coupé ou moulé.

Les deux portions longitudinales 82 sont chacune en forme générale d'une bande rectangulaire.

Ces deux portions longitudinales 82 se rejoignent au sein de la lèvre longitudinale radiale 5. Elles sont superposées et ménagées à distance l'une par rapport à l'autre.

En l'espèce, ces deux portions longitudinales 82 s'étendent chacune :
- sur toute la largeur de la lèvre longitudinale radiale 5 (c'est-à-dire encore entre ses deux bordures longitudinales 51, 52), et
- parallèlement, ou au moins approximativement parallèlement, l'une par rapport à l'autre et par rapport aux deux surfaces opposées 53 de la lèvre longitudinale radiale 5.

Tenant compte de cet agencement du pli de renfort 8, la paroi tubulaire 2 comporte deux couches élastomères 71, 72 qui prennent en sandwich la partie principale 81 du pli de renfort 8 :
- une couche élastomère intérieure 71, continue, formant la surface intérieure 21 de la paroi tubulaire 2, et
- une couche élastomère extérieure 72, également continue, formant la surface extérieure 22 de la paroi tubulaire 2.

Les couches élastomères 71, 72 ont avantageusement une épaisseur comprise entre 0,75 et 3 mm.

La lèvre longitudinale radiale 5 comprend également plusieurs couches élastomères superposées :
- une portion centrale 711, monobloc et unique, prolongeant la couche élastomère intérieure 71 et prise en sandwich entre les deux portions longitudinales 82 du pli de renfort 8, et
- deux portions extérieures 721, prolongeant la couche élastomère extérieure 72 et prenant en sandwich les deux portions longitudinales 82 du pli de renfort 8.

La portion centrale 711 est réalisée monobloc avec la couche élastomère intérieure 71 ; les deux portions extérieures 721 sont réalisées monoblocs avec la couche élastomère extérieure 72.

De manière générale, le dispositif tubulaire souple 1 pourrait comporter encore au moins un autre pli de renfort.

Par exemple, ce pli de renfort supplémentaire pourrait être similaire à celui décrit ci-dessus et être intégré dans l'épaisseur d'une couche élastomère 71, 72 précitée et/ou dans la lèvre longitudinale radiale 5.

Par ailleurs, la paroi tubulaire 2 est équipée d'une valve 6 (représentée très schématiquement sur la figure 4), qui est raccordée avec la chambre interne 3 pour son remplissage.

Cette valve 6 est avantageusement rapportée de la manière classique en soi ; elle consiste par exemple en une valve passe paroi standard pour pneu agricole.

La figure 2 représente le dispositif tubulaire souple 1 à vide (c'est-à-dire avec sa chambre étanche 3 qui est vide de tout fluide).

Dans ce cas, on remarque que ce dispositif tubulaire souple 1 se présente sous la forme d'une bande parallélépipédique, plate, comportant deux parois parallélépipédiques 11 superposées qui sont assemblées (avantageusement de manière monobloc et continue) au niveau de deux portions latérales 12, 13 pour former la chambre étanche 3.

Une première portion latérale 12 (à droite sur la figure 2) présente une largeur inférieure à la seconde portion latérale 13 (à gauche sur la figure 2).

La première portion latérale 12 est ainsi destinée à former la nervure longitudinale radiale 55 précitée ; la seconde portion latérale 13 est destinée à former la lèvre longitudinale radiale 5 précitée.

Le pli de renfort 8 comprend quant à lui plusieurs pans :
- deux pans principaux 85 s'étendant chacun sur la largeur de l'une des deux parois parallélépipédiques 11, et
- un pan de jonction 86 s'étendant au sein de la première portion latérale 12, raccordant les deux pans principaux 85.

Les deux pans principaux 85 et le pan de jonction 86 forment ensemble la partie principale 81 du pli de renfort 8.

Au sein de la seconde portion latérale 13, les deux pans principaux 85 s'étendent parallèlement et à distance l'un de l'autre de manière à former les portions longitudinales 82 du pli de renfort 8.

Ces portions longitudinales 82 débouchent avantageusement le long de la bordure extérieure 52 de la lèvre longitudinale radiale 5.

A vide, ce dispositif tubulaire souple 1 est particulièrement plat.

Cet aspect est notamment intéressant pour le transport, de manière à faciliter son transport.

### Fabrication du dispositif

Le dispositif tubulaire souple 1 selon l'invention peut être fabriqué par l'assemblage d'un ensemble de couches superposées, pour former un ensemble de type monobloc.

La technologie d'assemblage peut être choisie parmi la vulcanisation, le collage ou le soudage.

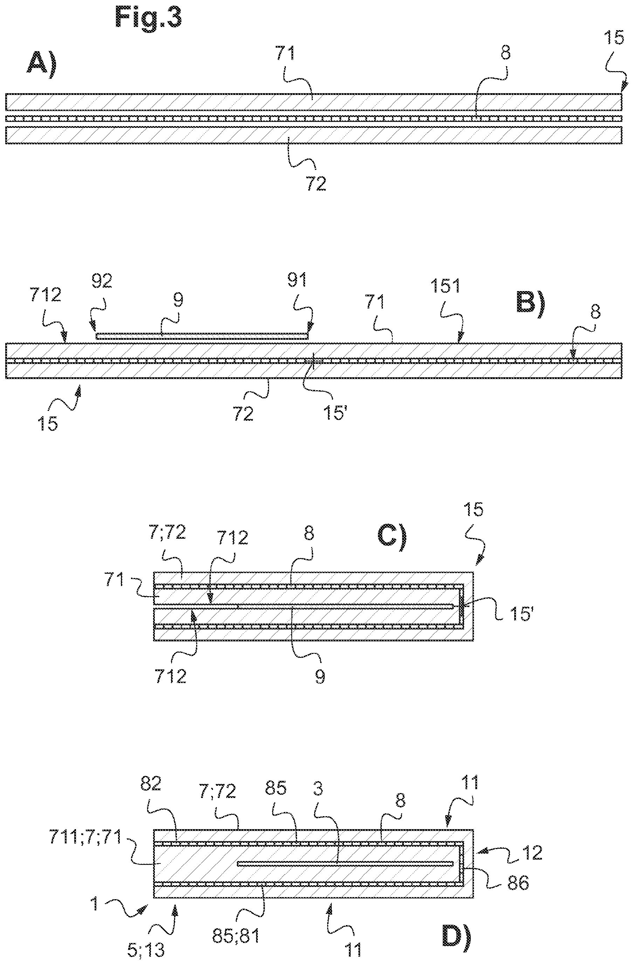

Un procédé de fabrication adapté est décrit à titre d'exemple ci-dessous en relation avec la figure 3.

Ce procédé comprend :
(i) une étape de superposition d'au moins deux couches en matériaux élastomères 71, 72 (destinées à former les couches intérieure 71 et extérieure 72 précitées) entre lesquelles est rapporté le pli de renfort 8, pour former ensemble une bande 15 dite « intermédiaire » (figure 3A),
(ii) une étape de dépose de moyens intercalaires 9 sur une surface libre 151 de la bande intermédiaire 15, aptes à empêcher localement une solidarisation de cette surface libre 151 pour former la chambre étanche 3 (figure 3B),
(iii) une étape de repliement en deux de la bande intermédiaire 15, le long d'une ligne de pliage correspondant à un axe longitudinal médian 15' de cette bande intermédiaire 15, de sorte à prendre en sandwich les moyens intercalaires 9 précités avec la surface libre 151 (figure 3C), et
(iv) une étape de solidarisation des surfaces en contact de la surface libre 151 repliée sur elle-même, pour former le dispositif tubulaire souple 1 (figure 3D).

Lors de l'étape de superposition (i), les deux couches en matériaux élastomères 71, 72 et le pli de renfort 8 ont avantageusement des dimensions identiques, ou au moins quasiment identiques.

Au sujet de l'étape de dépose (ii), les moyens intercalaires 9 consistent en des moyens adaptés à éviter la solidarisation entre les surfaces en regard de la couche intérieure 71 repliée sur elle-même.

Dans le cas d'une vulcanisation, les moyens intercalaires 9 consistent par exemple en des bandes ou tubes qui sont avantageusement réalisés dans un matériau choisi parmi les plastiques résistants à la chaleur :
- un film anti-feu contenant un retardateur, par exemple en polypropylène, en acrylon itrile-butad iène-styrène,
- une couche d'un matériau élastomère vulcanisé, par exemple un tuyau réalisé en caoutchouc styrène-butadiène (SBR), en caoutchouc naturel (NR), ou en éthylène-propylène-diène monomère.

Les moyens intercalaires 9 ont par exemple une forme rectangulaire allongée.

Ces moyens intercalaires 9 sont dimensionnés pour s'étendre, d'un premier côté longitudinal 91, le long de l'axe longitudinal médian 15' et, d'un second côté longitudinal 92, à distance de la bordure longitudinale juxtaposée de la couche intérieure 71 pour préserver deux bandes libres 712 au niveau de cette couche intérieure 71.

Au moment de l'étape de solidarisation (iv), la couche intérieure 71 est repliée sur elle-même.

Les deux bandes libres 712 en contact de cette couche intérieure 71 vont ainsi être solidarisée l'une avec l'autre pour former la portion centrale 711 précitée.

Aux extrémités, la chambre étanche 3 est par exemple fermée par des dispositifs haut et bas de pincement.

### Enceinte d'élevage

L'invention concerne encore une enceinte d'élevage E qui est équipée d'au moins un dispositif tubulaire souple 1 (figures 4 et 5).

L'enceinte d'élevage E consiste avantageusement en une étable pour l'élevage de bovins, en particulier de bovins laitiers ou de bovins à viande.

Cette enceinte d'élevage E comporte des stalles de couchage qui consistent ici en des logettes L, ménagées sur au moins une ligne.

Les logettes L constituent un compromis entre un couchage confortable pour le bovin, le respect du mouvement levé/couché, une station debout confortable et un minimum de souillures dans la logette.

Chaque logette L, classique en soi, est délimitée par :
- deux séparations latérales L1, par exemple des structures tubulaires,
- un seuil arrière de logette L2, s'étendant le long d'un couloir d'accès,
- une limite avant L3, comprenant avantageusement une barre haute au garrot et un dispositif tubulaire souple 1 selon l'invention pour former un arrêtoir inférieur (ou limiteur d'avancement), et
- un sol L4, par exemple une dalle de béton.

Cette série de logettes L est avantageusement équipée d'un système de confort L5 sur lequel l'animal est destiné à séjourner, par exemple sous la forme d'un matelas de confort.

Le dispositif tubulaire souple 1 formant arrêtoir s'étend le long de la limite avant L3 de l'alignement de logettes L, et ainsi le long de la bordure avant du système de confort L5.

En l'espèce, le seuil arrière L2 est également équipé d'un dispositif tubulaire souple 1 selon l'invention.

Ce dispositif tubulaire souple 1 s'étend ainsi le long des seuils arrières L2 des alignements de logettes L et le long de la bordure arrière du système de confort L5.

L'intérêt de ce dispositif tubulaire souple 1 additionnel est de retenir une couche de confort formée de matière accumulé sur le matelas, telle que des résidus secs issus de séparateur de phase, du sable ou de la paille.

De plus, lorsque l'animal couché étend sa patte, cela lui évite des blessures aux jarrets.

Chaque dispositif tubulaire souple 1 est fixé dans le sol L4 par le biais de moyens de fixation 57 rapportés au travers de sa lèvre longitudinale radiale 5.

Les moyens de fixation 57 consistent par exemple en des pointes, régulièrement réparties sur la longueur de la lèvre longitudinale radiale 5.

Ces moyens de fixation 57 traversent la lèvre longitudinale radiale 5, de part en part au niveau de ses deux surfaces opposées 53. Ces moyens de fixation 57 traversent ainsi les deux portions longitudinales 82 du pli de renfort 8 pour assurer une résistance optimale.

L'une des surfaces 53 de la lèvre longitudinale radiale 5 est ainsi plaquée contre le sol L4.

L'assemblage des deux portions longitudinales 82 du dispositif tubulaire souple 1 est ainsi renforcé par les moyens de fixation 57.

Cet agencement permet alors d'accroitre significativement la résistance du dispositif tubulaire souple 1, et ainsi de réduire sensiblement le risque de phénomènes de déchirures / ruptures.

Chaque dispositif tubulaire souple 1 est en plus avantageusement orienté de sorte que sa paroi tubulaire 2 soit interposée entre sa lèvre longitudinale radiale 5 et le système de confort L5.

Le système de confort L5 est ainsi bordé longitudinalement par les deux dispositifs tubulaires souples 1.

L'enceinte d'élevage E est encore avantageusement équipée de moyens 61 pour remplir le ou les dispositifs tubulaires souples 1 (représentés schématiquement sur la figure 4).

Ces moyens de remplissage 61 consistent par exemple en une source d'eau associée à un circulateur. L'eau peut également être stagnante, remplissant uniquement un rôle de confort.

Le remplissage de chaque dispositif tubulaire souple 1 est contrôlé avec un manomètre qui est disposé entre ce dispositif tubulaire souple 1 et le service d'eau.

En pratique, le dispositif tubulaire souple 1 avant, situé le long de la limite avant L3, est toujours rempli, avec une pression plus ou moins importante selon les animaux (réglage en hauteur et en dureté).

Le dispositif tubulaire souple 1 arrière, situé le long des seuils arrière L2, est également toujours rempli, sauf lors d'opérations de nettoyage de la logette L et de son système de confort L5.

En effet, ce dispositif tubulaire souple 1 arrière peut être vidé de sorte à assurer son affaissement et ainsi à permettre l'évacuation de l'eau de nettoyage vers le couloir d'accès (en passant au-dessus du dispositif tubulaire souple 1 arrière, aplati comme illustré sur la figure 2).

## Revendications

1. Dispositif tubulaire souple comprenant une pièce monobloc (1) comportant une paroi tubulaire (2) qui délimite une chambre étanche (3) destinée à être remplie avec un fluide,
laquelle paroi tubulaire (2) comprend une matrice élastomère (7) dans laquelle est intégré au moins un pli de renfort (8) délimité par deux portions longitudinales (82),
**caractérisé en ce que** ledit au moins un pli de renfort (8) a une forme générale d'un manchon qui s'étend au sein de ladite paroi tubulaire (2) pour entourer ladite chambre étanche (3),
et **en ce que** lesdites deux portions longitudinales (82) dudit au moins un pli de renfort (8) sont juxtaposées l'une par rapport à l'autre.

2. Dispositif tubulaire souple selon la revendication 1, **caractérisé en ce que** la pièce monobloc (1) comporte une lèvre longitudinale radiale (5), raccordée longitudinalement à la paroi tubulaire (2),
et **en ce que** les deux portions longitudinales (82) dudit au moins un pli de renfort (8) sont superposées au sein de ladite lèvre longitudinale radiale (5).

3. Dispositif tubulaire souple selon la revendication 2, **caractérisé en ce que** ladite paroi tubulaire (2) comporte une couche élastomère intérieure (71) et une couche élastomère extérieure (72), qui prennent en sandwich ledit au moins un pli de renfort (8),
et **en ce que** ladite lèvre longitudinale radiale (5) comporte les deux portions longitudinales (82) dudit au moins un pli de renfort (8) qui, d'une part, prennent en sandwich une portion latérale (711) de la couche élastomère intérieure (71) et, d'autre part, sont pris en sandwich par deux portions latérale (721) de la couche élastomère extérieure (72).

4. Dispositif tubulaire souple selon l'une quelconque des revendications 1 à 3, **caractérisé en ce que**, à vide, ledit dispositif tubulaire souple (1) se présente sous la forme d'une bande parallélépipédique comportant deux parois parallélépipédiques (11) superposées qui délimitent la chambre étanche (3) et qui sont assemblées au niveau de deux portions latérales (12, 13),
lequel au moins un pli de renfort (8) comprend, d'une part, deux pans principaux (85) s'étendant chacun sur la largeur de l'une des deux parois parallélépipédiques (11) et, d'autre part, un pan de jonction (86) s'étendant au sein d'une première (12) desdites portions latérales (12, 13),
et lesquelles portions longitudinales (82) dudit au moins un pli de renfort (8) s'étendent au sein d'une seconde (13) desdites portions latérales (12, 13).

5. Enceinte d'élevage comprenant au moins une logette (L) délimitée par :
- deux séparations latérales (L1),
- un seuil arrière de logette (L2), s'étendant le long d'un couloir d'accès,
- une limite avant (L3), formant le fond de la logette (L),
laquelle limite avant (L3) comporte un dispositif tubulaire souple (1) selon l'une quelconque des revendications 1 à 4, pour former un arrêtoir inférieur.

6. Enceinte d'élevage selon la revendication 5, **caractérisée en ce que** ledit seuil arrière (L2) est également équipé d'un dispositif tubulaire souple (1) selon l'une quelconque des revendications 1 à 4.

7. Enceinte d'élevage selon l'une quelconque des revendications 5 ou 6, **caractérisée en ce que** ladite enceinte d'élevage (E) comprend des moyens (61) pour remplir ledit au moins un dispositif tubulaire souple (1).

8. Enceinte d'élevage selon l'une quelconque des revendications 5 à 7, en relation avec la revendication 2, **caractérisée en ce que** ledit au moins un dispositif tubulaire souple (1) est fixé par le biais de moyens de fixation (57) rapportés au travers de sa lèvre longitudinale radiale (5).

9. Procédé pour la fabrication du dispositif tubulaire souple selon l'une quelconque des revendications 1 à 4, comprenant :
(i) une étape de superposition d'au moins deux couches (71, 72) en matériau élastomère entre lesquelles est rapporté au moins un pli de renfort (8), pour former une bande intermédiaire (15),
(ii) une étape de dépose de moyens intercalaires (9) sur une surface libre (151) de ladite bande intermédiaire (15), aptes à empêcher localement une solidarisation de ladite surface libre (151) pour former la chambre étanche (3),
(iii) une étape de repliement en deux de ladite bande intermédiaire (15), le long d'une ligne de pliage correspond à un axe longitudinal médian (15') de ladite bande intermédiaire (15), de sorte à prendre en sandwich lesdits moyens intercalaires (9), et
(iv) une étape de solidarisation des surfaces (151) en contact desdites couches superposées (71, 72), pour former ledit dispositif tubulaire souple (1).

## Patentansprüche

1. Flexible rohrförmige Vorrichtung mit einem einstückigen Teil (1), das eine rohrförmige Wand (2) aufweist, die eine dichte Kammer (3) begrenzt, die dazu bestimmt ist, mit einer Flüssigkeit gefüllt zu werden,
wobei die rohrförmige Wand (2) eine Elastomermatrix (7) aufweist, in die mindestens eine durch zwei Längsabschnitte (82) begrenzte Verstärkungsfalte (8) integriert ist,
**dadurch gekennzeichnet, daß** die mindestens eine Verstärkungsfalte (8) eine allgemeine Form einer Hülse hat, die sich in der rohrförmigen Wand (2) erstreckt, um die dichte Kammer (3) zu umgeben,
und daß die beiden Längsabschnitte (82) der mindestens einen Verstärkungsfalte (8) zueinander benachbart angeordnet sind.

2. Flexible rohrförmige Vorrichtung gemäß Anspruch 1, **dadurch gekennzeichnet, daß** das einstückige Teil (1) eine mit der rohrförmigen Wand (2) längsverbundene radiale Längslippe (5) aufweist
und daß die beiden Längsabschnitte (82) der mindestens einen Verstärkungsfalte (8) innerhalb der radialen Längslippe (5) übereinander angeordnet sind.

3. Flexible rohrförmige Vorrichtung gemäß Anspruch 2, **dadurch gekennzeichnet, daß** die rohrförmige Wand (2) eine innere Elastomerschicht (71) und eine äußere Elastomerschicht (72) aufweist, die die mindestens eine Verstärkungslippe (8) in die Mitte nehmen,
und daß die radiale Längslippe (5) die beiden Längsabschnitte (82) der mindestens einen Verstärkungsfalte (8) aufweist, die einerseits einen seitlichen Abschnitt (711) der inneren Elastomerschicht (71) in die Mitte nehmen und andererseits von zwei seitlichen Abschnitten (721) der äußeren Elastomerschicht (72) in die Mitte genommen werden.

4. Flexible rohrförmige Vorrichtung gemäß einem der Ansprüche 1 bis 3, **dadurch gekennzeichnet, daß** die flexible rohrförmige Vorrichtung (1) im leeren Zustand in Form eines quaderförmigen Bands vorliegt, das zwei übereinanderliegende quaderförmige Wände (11) aufweist, die die dichte Kammer (3) begrenzen und die an zwei seitlichen Abschnitten (12, 13) zusammengefügt sind,
wobei die mindestens eine Verstärkungsfalte (8) einerseits zwei Hauptwandungen (85), die sich jeweils über die Breite einer der quaderförmigen Wände (11) erstrecken, und andererseits eine Verbindungswandung (86), die sich in einem ersten (12) der seitlichen Abschnitte (12, 13) erstreckt, aufweist
und wobei sich die Längsabschnitte (82) der mindestens einen Verstärkungsfalte (8) in einem zweiten (13) der seitlichen Abschnitte (12, 13) erstrecken.

5. Aufzuchtgehäuse mit mindestens einer Buchte (L), die durch
- zwei seitliche Trennungen (L1),
- eine hintere Buchtenschwelle (L2), die sich entlang eines Zugangsflurs erstreckt,
- eine vordere Grenze (L3), die den Boden der Buchte (L) bildet,
begrenzt ist,
wobei die vordere Grenze (L3) eine flexible rohrförmige Vorrichtung gemäß einem der Ansprüche 1 bis 4 aufweist, um einen unteren Stopper zu bilden.

6. Aufzuchtgehäuse gemäß Anspruch 5, **dadurch gekennzeichnet, daß** die hintere Schwelle (L2) ebenfalls mit einer flexiblen rohrförmigen Vorrichtung gemäß einem der Ansprüche 1 bis 4 ausgestattet ist.

7. Aufzuchtgehäuse gemäß einem der Ansprüche 5 oder 6, **dadurch gekennzeichnet, daß** das Aufzuchtgehäuse (E) Mittel (61) zum Auffüllen der mindestens einen flexiblen rohrförmigen Vorrichtung (1) aufweist.

8. Aufzuchtgehäuse gemäß einem der Ansprüche 5 bis 7 in Verbindung mit Anspruch 2, **dadurch gekennzeichnet, daß** die mindestens eine flexible rohrförmige Vorrichtung (1) mittels Verbindungsmitteln (57) befestigt ist, die durch ihre radiale Längslippe (5) hindurchgeführt sind.

9. Verfahren zum Herstellen der flexiblen rohrförmigen Vorrichtung gemäß einem der Ansprüche 1 bis 4 mit:
(i) einem Schritt des Übereinanderlegens von mindestens zwei Schichten (71, 72) aus einem Elastomermaterial, zwischen die mindestens eine Verstärkungsfalte (8) eingebacht ist, um ein Zwischenband (15) zu bilden,
(ii) einem Schritt des Auflegens von Einlagemitteln (9) auf eine freie Oberfläche (151) des Zwischenbands (15), die geeignet sind, eine Verbindung der freien Oberfläche (151) lokal zu verhindern, um die dichte Kammer (3) zu bilden,
(iii) einem Schritt des Faltens des Zwischenbands (15) entlang einer Faltlinie, die einer Mittelachse (15') des Zwischenbands (15) entspricht, um die Einlagemittel (9) in die Mitte zu nehmen, und
(iv) einem Schritt des Befestigens der Oberflächen (151), die mit den übereinanderliegenden Schichten (71, 72) in Kontakt sind, um die flexible rohrförmige Vorrichtung (1) zu bilden.

## Claims

1. A flexible tubular device comprising a single-piece part (1) having a tubular wall (2) that delimits a sealed chamber (3) intended to be filled with a fluid,
wherein said tubular wall (2) comprises an elastomeric matrix (7) into which is integrated at least one reinforcement ply (8) delimited by two longitudinal portions (82),
**characterized in that** said at least one reinforcement ply (8) has the general shape of a sleeve that extends within said tubular wall (2) to surround said sealed chamber (3),
and **in that** said two longitudinal portions (82) of said at least one reinforcement ply (8) are juxtaposed to each other.

2. The flexible tubular device according to claim 1, **characterized in that** the single-piece part (1) includes a radial longitudinal lip (5), longitudinally connected to the tubular wall (2),
and **in that** the two longitudinal portions (82) of said at least one reinforcement ply (8) are superimposed to each other within said radial longitudinal lip (5).

3. The flexible tubular device according to claim 2, **characterized in that** said tubular wall (2) includes an inner elastomeric layer (71) and an outer elastomeric layer (72), that sandwich said at least one reinforcement ply (8),
and **in that** said radial longitudinal lip (5) includes the two longitudinal portions (82) of said at least one reinforcement ply (8) that, on the one hand, sandwich a lateral portion (711) of the inner elastomeric layer (71) and, on the other hand, are sandwiched by two lateral portions (721) of the outer elastomeric layer (72).

4. The flexible tubular device according to any one of claims 1 to 3, **characterized in that**, when empty, said flexible tubular device (1) has the shape of a parallelepipedal strip having two superimposed parallelepipedal walls (11) that delimit the sealed chamber (3) and that are assembled at two lateral portions (12, 13),
wherein said at least one reinforcement ply (8) comprises, on the one hand, two main sections (85) each extending over the width of one of the two parallelepipedal walls (11) and, on the other hand, a junction section (86) extending within a first one (12) of said lateral portions (12, 13),
and wherein said longitudinal portions (82) of said at least one reinforcement ply (8) extend within a second one (13) of said lateral portions (12, 13).

5. A livestock enclosure comprising at least one stall (L) delimited by:
- two lateral partitions (L1),
- a stall rear sill (L2), extending along an access corridor,
- a front limit (L3), forming the back of the stall (L),
wherein said front limit (L3) includes a flexible tubular device (1) according to any one of claims 1 to 4, to form a lower stop.

6. A livestock enclosure according to claim 5, **characterized in that** said rear sill (L2) is also equipped with a flexible tubular device (1) according to any one of claims 1 to 4.

7. A livestock enclosure according to any one of claims 5 or 6, **characterized in that** said livestock enclosure (E) comprises means (61) for filling said at least one flexible tubular device (1).

8. A livestock enclosure according to any one of claims 5 to 7, in relation with claim 2, **characterized in that** said at least one flexible tubular device (1) is fastened through fastening means (57) added through its radial longitudinal lip (5).

9. A method for manufacturing the flexible tubular device according to any one of claims 1 to 4, comprising:
(i) a step of superimposing at least two layers (71, 72) of elastomeric material between which is added at least one reinforcement ply (8), to form an intermediate strip (15),
(ii) a step of applying inter-layer means (9) on a free surface (151) of said intermediate strip (15), adapted to locally prevent said free surface (151) from being attached, to form the sealed chamber (3),
(iii) a step of folding in half said intermediate strip (15), along a folding line corresponding to a median longitudinal axis (15') of said intermediate strip (15), so as to sandwich said inter-layer means (9), and
(iv) a step of attaching together the surfaces (151) in contact of said superimposed layers (71, 72), to form said flexible tubular device (1).
